# FASCICULE DE BREVET EUROPEEN

(11) **EP 2 729 983 B1**
(45) Date de publication et mention de la délivrance du brevet: **13.09.2017**
(21) Numéro de dépôt: 12730921.9
(22) Date de dépôt: 26.06.2012
(51) Int. Cl.: H01M 8/24, H01M 8/02, H01M 8/04

(54) **BRIDE D'ALIMENTATION ET DE SERRAGE POUR UN MODULE DE PILE À COMBUSTIBLE, ET SYSTÈME DE PILE À COMBUSTIBLE ASSOCIÉ**
GASVERTEILER- UND KOMPRESSIONSSTRUKTUR FÜR BRENNSTOFFZELLENMODUL UND BRENNSTOFFZELLENSYSTEM
MANIFOLD AND COMPRESSION STRUCTURE FOR A FUEL CELL MODULE AND FUEL CELL SYSTEM

(30) Priorité: 08.07.2011 FR 1156253
(43) Date de publication de la demande: 14.05.2014
(73) Titulaire: Areva Stockage d'Energie, 13547 Aix-en-Provence (FR)
(72) Inventeur: VANNUCCI, Didier, F-13600 La Ciotat (FR)
(74) Mandataire: Lavoix
(86) Numéro de dépôt international: PCT/EP2012/062336
(87) Numéro de publication internationale: WO 2013/007514

(56) Documents cités:
- FR-A1- 2 936 101
- US-A- 5 486 430
- US-A1- 2003 162 075
- US-A1- 2003 180 603
- US-A1- 2004 046 526
- US-A1- 2005 106 446

## Description

La présente invention concerne un système de pile à combustible, du type comprenant une pluralité de modules de pile à combustible, chaque module comprenant un empilement de cellules de pile à combustible et un dispositif de serrage de l'empilement, le dispositif de serrage comprenant au moins une bride comprenant une plaque et au moins un collecteur pour alimenter les cellules de l'empilement en fluide oxydant ou réducteur ou pour extraire des produits de réaction hors de l'empilement, la plaque comprenant une face d'appui en appui sur une extrémité de l'empilement et au moins une face de raccordement prévue pour être en regard d'une face de raccordement d'une autre plaque adjacente.

De tels systèmes de pile à combustible sont connus. Ils permettent la génération d'un courant électrique par une réaction d'oxydoréduction entre les fluides oxydant et réducteur.

Chaque cellule de pile à combustible comprend généralement un assemblage membrane électrodes (AME), constitué d'une membrane électrolytique associée à des électrodes, et deux compartiments anodique/cathodique constitués de couches de diffusion reposant sur des plaques collectrices. Celles-ci assurent la circulation des fluides oxydant et réducteur de chaque coté de l'AME, ainsi que la collection du courant. Le fluide réducteur est adapté pour produire des protons lorsque des électrons lui sont apportés. La membrane est adaptée pour être traversée par ces protons qui réagissent du côté du compartiment cathodique avec le fluide oxydant pour produire notamment des électrons, électrons qui sont collectés par une des plaques collectrices pour alimenter une charge en courant électrique.

La tension obtenue aux bornes d'une cellule de pile à combustible étant généralement faible (de l'ordre de 1V), celles-ci sont le plus souvent regroupées au sein d'empilements présentant des tensions de sortie plus importantes. Les cellules d'un empilement sont maintenues empilées les unes sur les autres à l'aide d'un dispositif de serrage comprenant deux brides aux extrémités longitudinales de l'empilement et liées l'une à l'autre par des tirants.

Cependant, il est préférable de limiter la taille des empilements, pour des raisons d'encombrement et pour faciliter l'approvisionnement en fluide des cellules. Aussi, pour obtenir des systèmes de pile à combustible de forte puissance, il est commun d'utiliser plusieurs empilements à l'intérieur d'un même système de pile à combustible, ces empilements étant raccordés en parallèle ou en série électrique.

Les différents empilements d'un même système de pile à combustible sont ainsi généralement disposés à proximité les uns des autres et sont alimentés en fluides oxydant et réducteurs, ainsi qu'en fluide de refroidissement pour l'évacuation de la chaleur produite par la réaction électrochimique, à l'aide de clarinettes de distribution. Cependant, de telles clarinettes augmentent significativement l'encombrement du système de pile à combustible.

US 5 486 430 propose une solution pour réduire l'encombrement des systèmes de pile à combustible. Ce document décrit ainsi un système de pile à combustible dans lequel les empilements sont accolés les uns aux autres dans une direction transversale et sont alimentés en fluide par des collecteurs s'étendant transversalement le long de l'accolement d'empilements, à une extrémité longitudinale des empilements, des orifices étant ménagés dans chaque bride pour mettre en communication fluidique les collecteurs avec les compartiments anodique et cathodique des cellules de chaque empilement.

Cependant, il a été observé qu'un tel système de pile à combustible est complexe de fabrication et peu modulaire.

Un objectif de l'invention est donc de proposer un système de pile à combustible à coût réduit. D'autres objectifs sont de limiter l'encombrement du système de pile à combustible et de proposer un système de pile à combustible modulaire.

A cet effet, l'invention est définie par les caractéristiques techniques de la revendication 1. Elle a pour objet un système de pile à combustible du type précité, caractérisé en ce que la plaque est formée d'une seule pièce de matière, le ou chaque collecteur étant ménagé à l'intérieur de la plaque et débouchant par une bouche sur la face de raccordement et en regard d'une bouche sur la face de raccordement de l'autre plaque adjacente, afin que les collecteurs des deux plaques soient en communication fluidique.

Dans des modes de réalisation préférés de l'invention, le système de pile à combustible comprend également l'une ou plusieurs des caractéristiques suivantes, prise(s) isolément ou suivant toute(s) combinaison(s) techniquement possible(s) :
- le système de pile à combustible comprend un joint individuel disposé sur la face de raccordement de la plaque, autour de la bouche, pour réaliser l'étanchéité avec la bouche sur la face de raccordement de l'autre plaque adjacente ;
- la face de raccordement délimite un logement annulaire de réception du joint, le logement annulaire entourant la bouche ;
- le joint est torique ;
- le système de pile à combustible comprend une pluralité de joints, dans lequel les joints sont identiques les uns aux autres ;
- la plaque est reliée à l'autre plaque adjacente par des moyens de liaison spécifiques réalisant une liaison uniquement entre ces deux plaques ;
- les moyens de liaison spécifiques comprennent au moins un organe de fixation s'étendant au travers de trous de fixation en regard formés dans les faces de raccordement en regard des plaques adjacentes ;
- le ou chaque collecteur débouche par au moins un orifice sur la face d'appui de la plaque, pour le raccordement fluidique du collecteur avec des compartiments anodiques ou cathodiques de l'empilement ;
- le ou chaque collecteur débouche dans des faces de raccordement opposées de la plaque ;
- le ou chaque collecteur est orienté sensiblement perpendiculairement à la direction d'empilement des cellules.

D'autres caractéristiques et avantages de l'invention apparaîtront à la lecture de la description qui va suivre, donnée uniquement à titre d'exemple et faite en se référant aux dessins annexés, sur lesquels :
- la Figure 1 est une vue en perspective, de dessus, d'un système de pile à combustible selon l'invention,
- la Figure 2 est une vue schématique en coupe d'une cellule de pile à combustible du système de la Figure 1,
- la Figure 3 est une vue en perspective, de dessus, d'une bride de serrage d'un module de pile à combustible du système de la Figure 1,
- la Figure 4 est une vue en perspective, de dessous, de la bride de serrage de la Figure 3,
- la Figure 5 est une vue en perspective d'un détail marqué V sur la Figure 3,
- la Figure 6 est une vue en perspective d'un détail marqué VI sur la Figure 1, et
- la Figure 7 est une vue schématique éclatée d'un module de pile à combustible du système de la Figure 1, avec représentation de la circulation fluidique des fluides oxydant et réducteur, ainsi que de l'eau de refroidissement, à travers l'empilement.

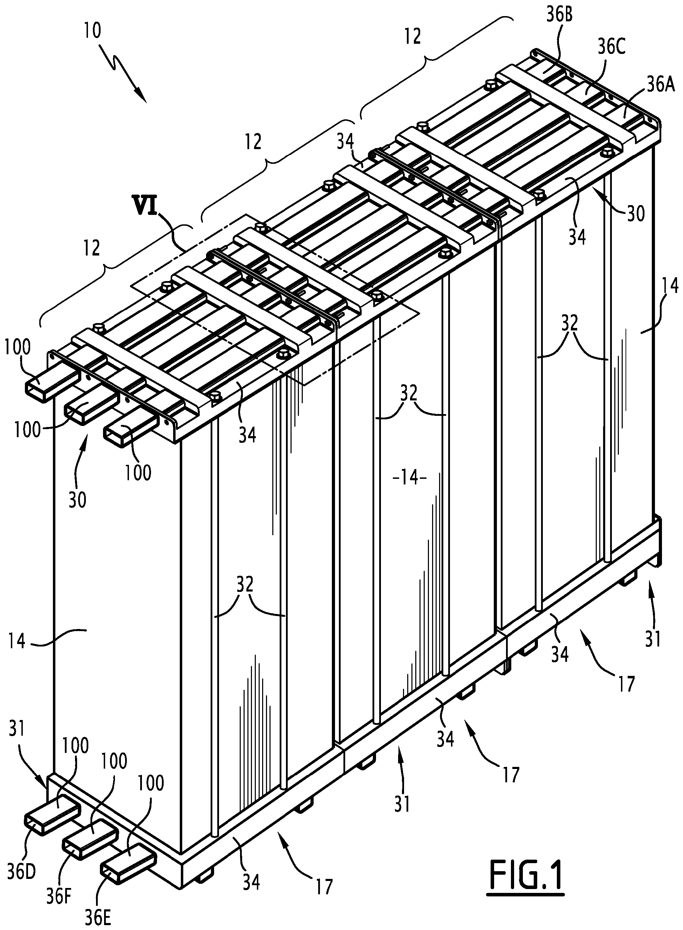

Le système de pile à combustible 10, représenté sur la Figure 1, comprend une pluralité de modules de pile à combustible 12 assemblés les uns aux autres. Dans l'exemple représenté, le système 10 comprend trois modules 12 alignés.

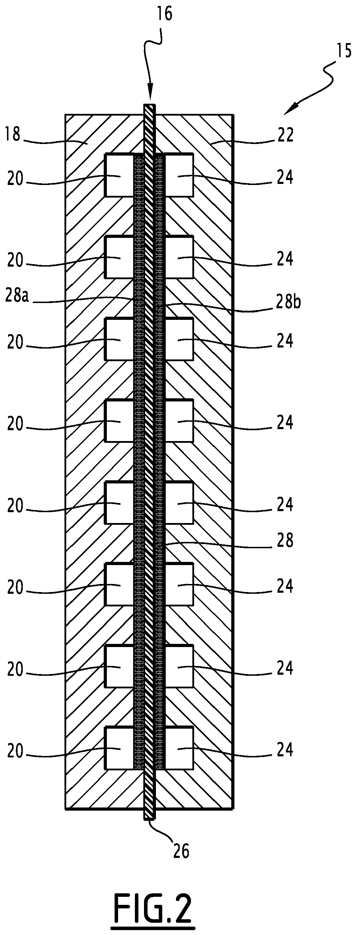

Les modules de pile à combustible 12 sont accolés les uns aux autres. Chaque module 12 comprend un empilement 14 de cellules de pile à combustible 15 (Figure 2), et un dispositif 17 de serrage de l'empilement 14.

Une cellule 15 de l'empilement 14 est représentée sur la Figure 2. Elle comprend un assemblage membrane-électrode 16 intercalé entre une plaque anodique 18 et une plaque cathodique 22.

L'assemblage membrane-électrode 16 comprend une membrane 26 d'échange d'ions prise en sandwich entre une anode 28a et une cathode 28b.

La membrane 26 isole électriquement l'anode 28a de la cathode 28b.

La membrane 26 est adaptée pour ne laisser que des ions chargés, de préférence des cations, la traverser. La membrane 26 est généralement une membrane d'échange de protons, adaptée pour ne laisser que des protons la traverser. La membrane 26 est typiquement en matériau polymère.

L'anode 28a et la cathode 28b comprennent chacune un catalyseur, typiquement du platine ou un alliage de platine, pour permettre la réaction.

La plaque anodique 18 délimite un conduit anodique 20 pour la circulation du gaz réducteur le long de l'anode 28a et en contact avec celle-ci. Pour ce faire, la plaque 18 est munie d'au moins un canal ménagé dans la face de la plaque tournée vers l'assemblage membrane-électrode 16 et refermé par ledit assemblage membrane électrode 16. La plaque anodique 18 est formée d'un matériau conducteur électriquement, typiquement du graphite. Le gaz réducteur utilisé est un gaz comprenant du dihydrogène, comme par exemple du dihydrogène pur.

La plaque cathodique 22 délimite un conduit cathodique 24 pour la circulation du gaz oxydant le long de la cathode 28b et en contact avec celle-ci. Pour ce faire, la plaque 22 est munie d'au moins un canal ménagé dans la face de la plaque tournée vers l'assemblage membrane-électrode 16 et refermé par ledit assemblage membrane électrode 16. La plaque cathodique 22 est formée d'un matériau conducteur électriquement, typiquement du graphite. Le gaz oxydant utilisé est un gaz comprenant du dioxygène, comme par exemple du dioxygène pur ou un mélange d'azote et de dioxygène (air)

La membrane 26 sépare les gaz oxydant et réducteur. Elle est disposée entre la plaque anodique 18 et la plaque cathodique 22 de la cellule 15 et isole celles-ci électriquement l'une de l'autre.

L'anode 28a est en contact électrique avec la plaque anodique 18. La cathode 28b et est en contact électrique avec la plaque cathodique 22. C'est au niveau de l'anode 28a qu'a lieu l'oxydation du gaz réducteur et que les électrons et les protons sont générés. Les électrons transitent ensuite via la plaque anodique 18 vers la cathode 28b de la cellule 15, ou vers la cathode d'une autre cellule, pour participer à la réduction du gaz oxydant.

Dans l'empilement 14, les cellules 15 sont empilées dans une direction longitudinale de l'empilement 14. La plaque anodique 18 de chaque cellule est en contact avec la plaque cathodique 22 de la cellule voisine. Les plaques anodique et cathodique 18, 22 assurent ainsi le transfert des électrons du gaz réducteur circulant dans une cellule vers le gaz oxydant circulant dans une autre cellule. Les plaques anodique 18 et cathodique 22 de deux cellules voisines de l'empilement 18 sont de préférence venues de matière et forment ensemble une plaque bipolaire.

Les conduits anodiques 20 des cellules 15 sont raccordés fluidiquement les uns aux autres et forment ensemble un compartiment anodique (non représenté) de l'empilement 14, et les conduits cathodiques 22 des cellules 15 sont raccordés fluidiquement les uns aux autres et forment ensemble un compartiment cathodique (non représenté) de l'empilement 14.

De retour à la Figure 1, les cellules 15 sont maintenues empilées grâce au dispositif de serrage 17.

Le dispositif de serrage 17 comprend deux brides de serrage 30, 31 disposées aux extrémités longitudinales de l'empilement 14, et des tirants 32 pour maintenir les brides 30, 31 serrées contre l'empilement 14.

Les tirants 32 sont adaptés pour exercer une force de serrage sur les brides 30, 31 de façon à ce que celles-ci exercent une force de compression sur l'empilement 14.

Chaque bride 30, 31 comprend une plaque 34 et une pluralité de collecteurs 36A, 36B, 36C, 36D, 36E, 36F.

Des collecteurs 36A, 36B, 36D, 36E sont adaptés pour alimenter les cellules 15 de l'empilement 14 en fluide oxydant ou réducteur, ou pour extraire les produits de réaction hors de l'empilement. De préférence, un collecteur 36C supplémentaire est adapté pour alimenter l'empilement 14 en fluide de refroidissement, et un dernier collecteur 36F est adapté pour extraire ledit fluide de refroidissement hors de l'empilement 14. Les collecteurs 36A, 36B, 36C, 36D, 36E, 36F sont de préférence, comme représenté, répartis sur les deux brides 30, 31.

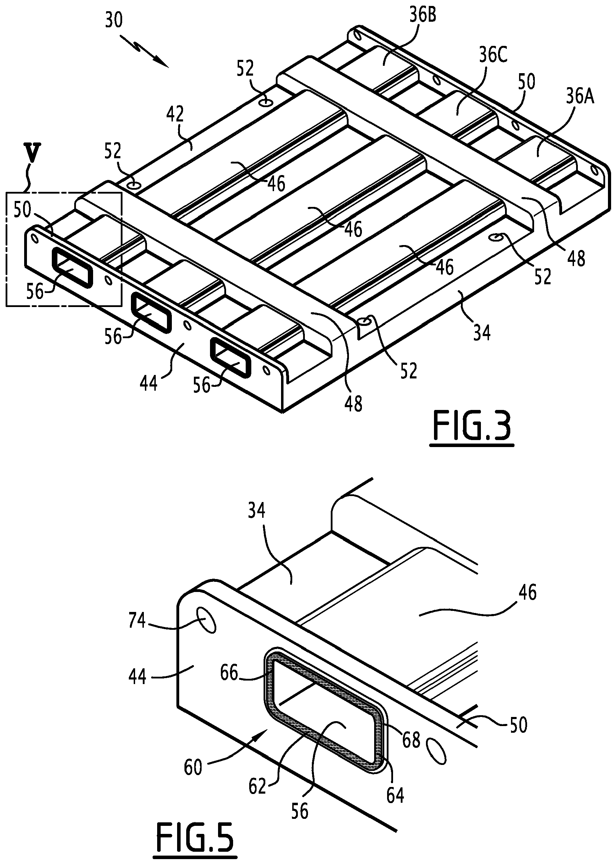

Dans la suite, la bride 30 d'un module 12 va être décrite, en regard des Figures 3 à 5.

La plaque 34 a une forme sensiblement parallélépipédique. Elle comprend une grande face d'appui 40, en appui sur une extrémité longitudinale de l'empilement 14, une grande face libre 42, opposée à la face d'appui 40, et des faces de raccordement 44 latérales.

Chaque face de raccordement 44 est prévue pour être disposée en regard d'une face de raccordement 44 d'une autre plaque 34 adjacente. De préférence, chaque face de raccordement 44 est prévue pour être en appui contre ladite face de raccordement 44 de l'autre plaque 34 adjacente. Ladite plaque 34 adjacente appartient à la bride 30 d'un autre module 12 accolé au module 12 dont fait partie la plaque 34 décrite. Dans l'exemple représenté, chaque face de raccordement 44 de la plaque 34 de la bride 30 du module 12 central (Figure 1) est ainsi en appui contre une face de raccordement 44 de la plaque 34 d'une bride 30 d'un module 12 d'extrémité (Figure 1).

On notera toutefois que, lorsque les modules 12 sont assemblés les uns aux autres pour former le système de pile à combustible 10, des faces de raccordement 44 ne sont pas disposées en regard d'une face de raccordement 44 d'une autre plaque 34 adjacente et sont laissées libres. Ces faces de raccordement 44 libres sont portées par les brides 30, 31 des modules 12 d'extrémité.

Pour chaque bride 30, les faces de raccordement 44 sont de préférence, comme représenté, au nombre de deux, et sont formées sur des bords opposés de la plaque 34.

La plaque 34 comprend également des nervures de renforcement 46, 48, rectilignes, faisant saillie depuis la grande face libre 42 de la plaque 34 vers l'extérieur de la plaque 34. Ces nervures 46, 48 comprennent des premières nervures 46 creuses, orientées dans une première direction. Les nervures 46, 48 comprennent également des deuxièmes nervures 48 pleines, orientées dans une deuxième direction, sensiblement perpendiculaire à la première direction. Les nervures 46, 48 sont ainsi entrecroisées.

La première direction est orientée perpendiculairement aux faces de raccordement 44.

La plaque 34 comprend en outre des nervures de raccordement 50, faisant saillie depuis la grande face libre 42 de la plaque 34 vers l'extérieur de la plaque 34. Chaque nervure de raccordement 50 s'étend le long d'un bord de la grande face libre 42. Elle définit une partie d'une face de raccordement 44. Chaque nervure de raccordement 50 est rectiligne et s'étend sensiblement perpendiculairement à la première direction.

La plaque 34 délimite par ailleurs des trous 52 de passage des tirants 32. Chaque trou 52 est traversant et débouche dans les grandes faces d'appui 40 et libre 42.

La plaque 34 est formée d'une seule pièce de matière.

Les collecteurs 36A, 36B, 36C de la bride 30 comprennent un premier collecteur 36A d'alimentation de l'empilement 14 en fluide oxydant, un deuxième collecteur 36B d'évacuation de produits de réaction hors de l'empilement 14, et un troisième collecteur 36C d'alimentation de l'empilement 14 en eau de refroidissement. Chaque collecteur 36A, 36B, 36C est orienté sensiblement perpendiculairement à la direction longitudinale d'extension de l'empilement 14.

Chaque collecteur 36A, 36B, 36C, est ménagé à l'intérieur de la plaque 34. En particulier, les collecteurs 36A, 36B, 36C sont constitués par les nervures creuses 46.

Chaque collecteur 36A, 36B, 36C débouche par une bouche 56 dans chaque face de raccordement 44. Dans l'exemple représenté, chaque collecteur 36A, 36B, 36C débouche dans des faces de raccordement 44 opposées de la plaque 34.

La bouche 56 est disposée sur la face de raccordement 44 de façon à être en regard d'une bouche 56 formée sur la face de raccordement 44 en regard de l'autre plaque 34 adjacente. Ainsi, chaque collecteur, respectivement 36A, 36B, 36C, de chaque bride 30 est en communication fluidique avec un collecteur, respectivement 36A, 36B, 36C, d'une autre bride 30.

Chaque collecteur, respectivement 36A, 36B, 36C, débouche également par des orifices, respectivement 58A, 58B, 58C, dans la face d'appui 40, pour le raccordement fluidique du collecteur avec un compartiment anodique ou cathodique de l'empilement 14, ou pour le raccordement fluidique du collecteur au circuit de refroidissement de l'empilement 14. Les orifices 58A, 58B, 58C sont ménagés dans la plaque 34.

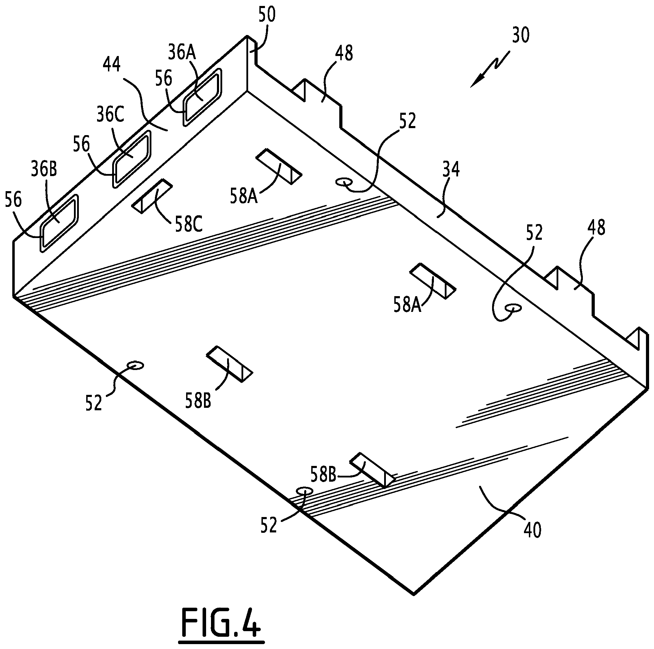

Dans l'exemple représenté sur la Figure 4, la plaque 34 de la bride 30 comprend ainsi deux orifices 58A de raccordement du collecteur 36A au compartiment cathodique de l'empilement 14, deux orifices 58B de raccordement du collecteur 36B au compartiment cathodique de l'empilement 14, et un orifice 58C de raccordement du collecteur 36C au circuit de refroidissement de l'empilement 14.

En référence à la Figure 5, le système 10 comprend également des moyens 60 d'étanchéité des collecteurs 36A, 36B, 36C de différentes brides 30 entre eux.

Ces moyens 60 comprennent des joints individuels 62 toriques. Chaque joint individuel 62 est disposé sur une face de raccordement 44, autour d'une bouche 56 respective. Le joint 62 est ainsi adapté pour réaliser l'étanchéité avec la bouche 56 en regard formée sur la face de raccordement 44 en regard de l'autre plaque 34 adjacente.

En particulier, la face de raccordement 44 délimite un logement annulaire 64 de réception du joint 62. Le joint 62 est disposé dans le logement annulaire 64 et fait partiellement saillie hors du logement 64. La portion en saillie du joint 62 est destinée à être reçue dans un logement annulaire 64 en regard formé sur la face de raccordement 44 en regard de l'autre plaque 34 adjacente. En particulier, le joint 62 est adapté pour que la portion en saillie entoure entièrement la bouche 56. L'étanchéité entre les collecteurs 36A, 36B, 36C des différentes brides 30 est ainsi améliorée.

Le logement annulaire 64 comprend un bord périphérique intérieur 66 délimité par le contour de la bouche 56, et un bord périphérique extérieur 68, formé par un épaulement entre le fond du logement 64 et la face de raccordement 44. Ainsi, il n'y a pas de matière interposée entre le fluide circulant dans le collecteur 36A, 36B, 36C et le joint torique 62, ce qui permet de renforcer l'étanchéité.

La profondeur du logement 64 par rapport au plan de la face de raccordement 44 est définie en fonction de la taille et des caractéristiques du joint 62, de manière à ce que celui-ci se trouve convenablement comprimé dans deux logements 64 en regard lorsque deux plaques 34 adjacentes sont assemblées, de façon à assurer l'étanchéité. En particulier, la profondeur du logement 64 est définie de sorte que la somme des profondeurs du logement 64 de la plaque 34 décrite et du logement 64 en regard de l'autre plaque 34 adjacente soit inférieure à l'épaisseur transversale du joint 62 au repos.

On notera que la profondeur du logement 64 est ainsi inférieure à l'épaisseur transversale du joint 62 au repos.

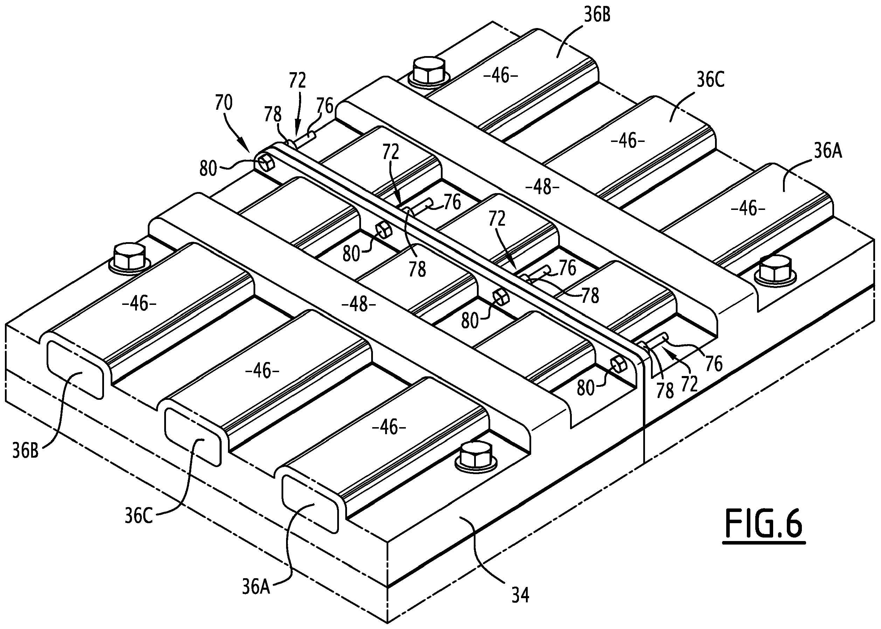

En référence à la Figure 6, le système 10 comprend en outre des moyens 70 spécifiques de liaison des plaques 34 adjacentes. Les moyens de liaison spécifiques 70 sont adaptés pour réaliser une liaison uniquement entre deux plaques 34 adjacentes. En particulier, les moyens de liaison spécifiques 70 ne sont pas adaptés pour lier plus de deux plaques 34 entre elles.

Ainsi, chaque module 12 est lié individuellement par ses brides 30, 31 aux autres modules 12 qui lui sont adjacents. Il est ainsi particulièrement aisé de retirer un module 12 du système 10, par exemple pour le remplacer s'il est défectueux, ou pour réduire la puissance du système 10 si cela est nécessaire.

Il est également particulièrement aisé d'ajouter un module 12 supplémentaire en le reliant simplement à un autre module 12, sans devoir préalablement désolidariser tous les modules 12 les uns des autres. Il n'est pas non plus nécessaire de modifier le système d'alimentation en fluide du système 10 lors de cet ajout, puisque le module 12 est livré avec ses propres collecteurs 36A, 36B, 36C, 36D, 36E, 36F, ceux-ci étant adaptés pour être facilement mis en communication fluidique avec les collecteurs 36A, 36B, 36C, 36D, 36E, 36F d'un autre module 12.

La modularité du système 10 est ainsi renforcée.

Les moyens de liaison spécifique 70 comprennent des organes de fixation 72 s'étendant au travers de trous de fixation 74 (Figure 5) en regard formés dans les faces de raccordement 44 en regard des plaques 34 adjacentes.

En particulier, les organes de fixation 72 sont constitués par une vis 76 et un écrou 78 et chaque trou de fixation 74 s'étend au travers d'une nervure de raccordement 50 d'une plaque 34, en débouchant dans des faces opposées de la nervure 50. Le corps de chaque vis 76 s'étend au travers de deux trous de fixation 74 en regard, de sorte que sa tête 80 soit en appui contre une face de la nervure de raccordement 50 d'une première des plaques 34 adjacentes. L'écrou 78 est vissé sur le corps de la vis 76 de façon qu'il soit appui contre une face de la nervure de raccordement de la deuxième des plaques 34 adjacentes. Ainsi, les nervures de raccordement 50 sont pincées entre la tête de la vis 76 et l'écrou 78, de sorte que les faces de raccordement 44 sont maintenues en appui l'une contre l'autre.

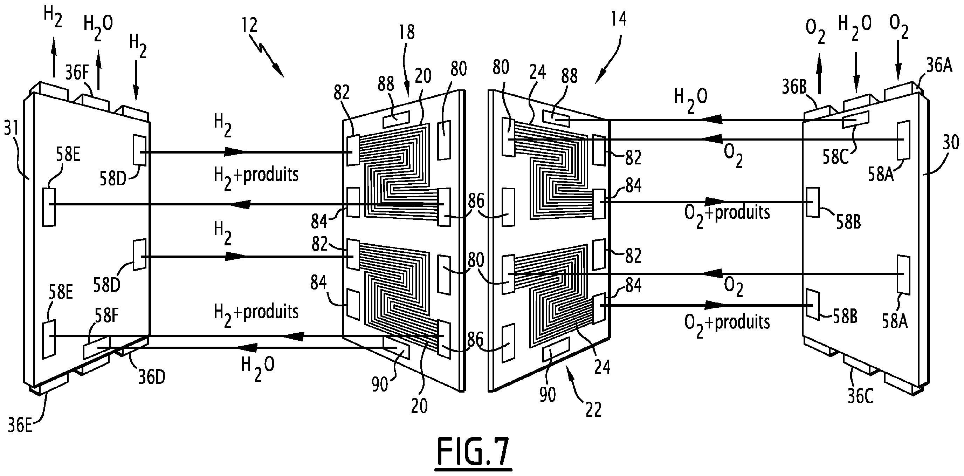

La description donnée ci-dessus d'une bride 30 s'applique également à l'autre bride 31 du même module 12. Pour cela, les références 30, 36A, 36B, 36C, 58A, 58B, 58C doivent simplement être remplacée par les références respectives 31, 36D, 36E, 36F, 58D, 58E, 58F, les références 36D, 36E, 36F, 58D, 58E, 58F désignant respectivement, en regard de la Figure 7 :
- un collecteur 36D d'alimentation de l'empilement 14 en fluide réducteur,
- un collecteur 36E d'évacuation des produits de réaction hors du compartiment anodique de l'empilement 14,
- un collecteur 36F d'évacuation de l'eau de refroidissement,
- deux orifices 58D de raccordement du collecteur 36D au compartiment anodique de l'empilement 14,
- deux orifices 58E de raccordement du collecteur 36E au compartiment anodique de l'empilement 14, et
- un orifice 58F de raccordement du collecteur 36F au circuit de refroidissement de l'empilement 14.

De retour à la Figure 1, le système de pile à combustible 10 comprend en outre des raccords 100 pour raccorder chaque collecteur 36A, 36B, 36C, 36D, 36E, 36F à un circuit d'alimentation fluidique (non représenté) du système de pile à combustible 10. Chaque raccord 100 est disposé en regard d'une bouche 56 ménagée dans une face de raccordement 44 libre.

Chaque raccord 100 est fixé à ladite face de raccordement 44 libre.

Les raccords 100 sont tous disposés à une même extrémité transversale de l'alignement de modules 12. En d'autres termes, les raccords 100 sont tous disposés en regard des bouches 56 ménagées dans les faces de raccordement 44 libres des brides 30, 31 d'un même module 12 d'extrémité. Ainsi, la compacité du système de pile à combustible 10 est encore augmentée.

Le système de pile à combustible 10 est adapté pour que les fluides oxydant, réducteur et de refroidissement ne puissent entrer et sortir du système 10 qu'en passant par les raccords 100. A cet effet, des bouchons (non représentés) sont prévus pour obturer les bouches 56 formées dans des faces de raccordement 44 libres et en regard desquelles aucun raccord 100 n'est disposé.

La circulation des fluides à l'intérieur de chaque module 12 va maintenant être décrite, en référence à la Figure 7.

Sur la Figure 7 sont représentées : les brides 30, 31, la plaque anodique 18 d'une première cellule 15, et la plaque cathodique 22 d'une deuxième cellule 15, les première et deuxième cellules 15 étant accolées l'une à l'autre de sorte que leurs plaques anodique 18 et cathodique 22 sont en contact l'une avec l'autre.

Comme visible sur la Figure 7, chacune des plaques anodique 18 et cathodique 22 délimite, outre ses conduits anodiques 20 et cathodiques 24 respectifs, des passages 80 pour le fluide oxydant, des passages 82 pour le fluide réducteur, des passages 84, 86 pour l'évacuation des produits de réaction, un passage 88 pour l'arrivée du fluide de refroidissement, et un passage 90 pour la sortie du fluide de refroidissement. Ces passages 80, 82, 84, 86, 88, 90 sont orientés longitudinalement et traversent les plaques anodiques 18 et cathodiques 22 des cellules 15 de l'empilement 14.

Les conduits anodiques 20 sont en communication fluidique exclusivement avec les passages 82 et 86. Les conduits cathodiques 24 sont en communication fluidique exclusivement avec les passages 80 et 84. Un circuit de refroidissement (non représenté), formé entre les plaques 18, 22, est en communication fluidique exclusivement avec les passages 88 et 90.

Le fluide oxydant est apporté par le collecteur 36A. Il pénètre dans l'empilement 14 via les orifices 58A. Il circule ensuite au travers des passages 80 jusqu'à s'engager dans un conduit cathodique 24 d'une cellule 15. Là, il réagit avec des protons pour former de l'eau et des électrons. L'eau et les restes de fluide oxydant parviennent ensuite à un passage 84 à partir duquel ces résidus de réaction sont guidés, via les passages 84 des autres plaques 18, 22, jusqu'à un orifice 58B par lequel ils rejoignent le collecteur 36B.

Dans le même temps, le fluide réducteur est apporté par le collecteur 36D. Il pénètre dans l'empilement 14 via les orifices 58D. Il circule ensuite au travers des passages 82 jusqu'à s'engager dans un conduit anodique 20 d'une cellule 15. Là, il réagit avec des électrons pour former des protons. Les restes de fluide réducteur parviennent ensuite à un passage 86 à partir duquel ces résidus de réaction sont guidés, via les passages 86 des autres plaques 18, 22, jusqu'à un orifice 58E par lequel ils rejoignent le collecteur 36E.

Enfin, simultanément, de l'eau de refroidissement est amenée par le collecteur 36C. Elle pénètre dans l'empilement 14 via l'orifice 58C. Elle circule ensuite au travers des passages 88 jusqu'à s'engager dans un circuit de refroidissement entre deux cellules 15. Là, elle se réchauffe. Elle parvient ensuite à un passage 90, à partir duquel elle est guidée, via les passages 90 des autres plaques 18, 22, jusqu'à l'orifice 58F par lequel elle rejoint le collecteur 36F.

On notera que les conduits cathodiques 24 de la plaque 22 sont divisés en deux parties, les conduits 24 de chaque partie débouchant dans un seul des deux passages 80, ce passage 80 étant différent de celui dans lequel débouchent les conduits 24 de l'autre partie. De même, les conduits anodiques 20 de la plaque 18 sont divisés en deux parties, les conduits 20 de chaque partie débouchant dans un seul des deux passages 82, ce passage 82 étant différent de celui dans lequel débouchent les conduits 20 de l'autre partie.

Cette configuration présente l'avantage que le trajet des fluides oxydant et réducteur à l'intérieur des conduits anodiques 20 et cathodiques 22 est limité. Ainsi, les pertes de charge des fluides à l'intérieur de ces conduits 20, 22 est réduite, ce qui permet de conserver un débit de fluide en sortie des conduits 20, 22 relativement élevé, et donc d'éviter l'engorgement en eau des conduits 20, 22.

Grâce à l'invention, l'encombrement du système de pile à combustible 10 est particulièrement réduit. En effet, les collecteurs 36A, 36B, 36C, 36D, 36E, 36F s'étendant perpendiculairement à la direction d'extension de l'empilement 14, la hauteur de chaque module 12 est réduite.

En outre, les collecteurs 36A, 36B, 36C, 36D, 36E, 36F étant ménagés à l'intérieur de chaque plaque 34, chaque module 12 est particulièrement facile à assembler, ce qui réduit les coûts de fabrication du système 10.

De plus, les joints individuels 62 constituent une solution efficace et économique pour assurer l'étanchéité entre les collecteurs 36A, 36B, 36C, 36D, 36E, 36F des différentes brides 30, 31.

Enfin, le fait de recourir à des moyens spécifiques 70 de liaison de chaque plaque 34 à une autre permet d'avoir une grande modularité du système 10.

Dans le présent mode de réalisation, le joint 62 est un joint torique.

Alternativement, le joint 62 a une autre section, telle que rectangulaire, à quatre lobes, ou toute autre section à la portée de l'homme du métier.

Avantageusement, comme dans le mode de réalisation représenté, l'ensemble des joints 62 disposés sur les faces de raccordement 44, entre les plaques 34 du système de pile à combustible 10, sont identiques.

## Revendications

1. Système de pile à combustible (10), comprenant une pluralité de modules de pile à combustible (12), chaque module (12) comprenant un empilement (14) de cellules (15) de pile à combustible et un dispositif (17) de serrage de l'empilement, le dispositif de serrage (17) comprenant au moins une bride (30, 31) comprenant une plaque (34) et au moins un collecteur (36A, 36B, 36C, 36D, 36E, 36F) pour alimenter les cellules (15) de l'empilement (14) en fluide oxydant ou réducteur ou pour extraire des produits de réaction hors de l'empilement (14), la plaque (34) comprenant une face d'appui (40) en appui sur une extrémité de l'empilement (14) et au moins une face de raccordement (44) latérale disposée en regard d'une face de raccordement (44) d'une autre plaque (34) adjacente appartenant à la bride (30) d'un autre module (12) accolé audit module (12), le ou chaque collecteur (36A, 36B, 36C, 36D, 36E, 36F) étant ménagé à l'intérieur de la plaque (34) et débouchant par une bouche (56) sur la face de raccordement (44) et en regard d'une bouche (56) sur la face de raccordement (44) de l'autre plaque (34) adjacente, afin que les collecteurs (36A, 36B, 36C, 36D, 36E, 36F) des deux plaques (34) soient en communication fluidique, **caractérisé en ce que** la plaque (34) est formée d'une seule pièce de matière et est reliée à l'autre plaque (34) adjacente par des moyens de liaison spécifiques (70) réalisant une liaison uniquement entre ces deux plaques (34).

2. Système de pile à combustible (10) selon la revendication 1, comprenant un joint (62) individuel disposé sur la face de raccordement (44) de la plaque (34), autour de la bouche (56), pour réaliser l'étanchéité avec la bouche (56) sur la face de raccordement (44) de l'autre plaque (34) adjacente.

3. Système de pile à combustible (10) selon la revendication 2, dans lequel la face de raccordement (44) délimite un logement annulaire (64) de réception du joint (62), le logement annulaire (64) entourant la bouche (56).

4. Système de pile à combustible (10) selon la revendication 2 ou 3, dans lequel le joint (62) est torique.

5. Système de pile à combustible (10) selon l'une quelconque des revendications 2 à 4, comprenant une pluralité de joints (62), dans lequel les joints (62) sont identiques les uns aux autres.

6. Système de pile à combustible (10) selon l'une quelconque des revendications précédentes, dans lequel les moyens de liaison spécifiques (70) comprennent au moins un organe de fixation (72) s'étendant au travers de trous de fixation (74) en regard formés dans les faces de raccordement (44) en regard des plaques (34) adjacentes.

7. Système de pile à combustible (10) selon l'une quelconque des revendications précédentes, dans lequel le ou chaque collecteur (36A, 36B, 36C, 36D, 36E, 36F) débouche par au moins un orifice (58A, 58B, 58C, 58D, 58E) sur la face d'appui (40) de la plaque (34), pour le raccordement fluidique du collecteur (36A, 36B, 36C, 36D, 36E, 36F) avec des compartiments anodiques ou cathodiques de l'empilement (14).

8. Système de pile à combustible (10) selon l'une quelconque des revendications précédentes, dans lequel le ou chaque collecteur (36A, 36B, 36C, 36D, 36E, 36F) débouche dans des faces de raccordement (44) opposées de la plaque (34).

9. Système de pile à combustible (10) selon l'une quelconque des revendications précédentes, dans lequel le ou chaque collecteur (36A, 36B, 36C, 36D, 36E, 36F) est orienté sensiblement perpendiculairement à la direction d'empilement des cellules (15).

## Patentansprüche

1. Brennstoffzellensystem (10), eine Vielzahl von Brennstoffzellenmodulen (12) umfassend, wobei jedes Modul (12) einen Brennstoffzellenstapel (14, 15) und eine Vorrichtung (17) zum Spannen des Stapels umfasst, die Spannvorrichtung (17) mindestens einen Flansch (30, 31) mit einer Platte (34) und mindestens einen Kollektor (36A, 36B, 36C, 36D, 36E, 36F) zum Versorgen der Zellen (15) des Stapels (14) mit einem oxidierenden oder reduzierenden Fluid oder zum Entfernen von Reaktionsprodukten aus dem Stapel (14) heraus aufweist, die Platte (34) eine Auflagefläche (40) in Anlage auf einem Ende des Stapels (14) und mindestens eine seitliche Anschlussfläche (44) aufweist, die gegenüberliegend zu einer Anschlussfläche (44) einer anderen benachbarten Platte (34) angeordnet ist, die zu dem Flansch (30) eines anderen an dem Modul (12) anliegenden Moduls gehört, der oder jeder Kollektor (36A, 36B, 36C, 36D, 36E, 36F) im Inneren der Platte (34) ausgebildet ist und über eine Durchlassöffnung (56) an der Anschlussfläche (44) und gegenüberliegend zu einer Durchlassöffnung (56) an der Anschlussfläche (44) der anderen benachbarten Platte (34) mündet, damit die Kollektoren (36A, 36B, 36C, 36D, 36E, 36F) der zwei Platten (34) in Fluidverbindung stehen, **dadurch gekennzeichnet, dass** die Platte (34) aus einem einzigen Materialstück gebildet ist und mit der anderen benachbarten Platte (34) durch spezifische Verbindungsmittel (70) verbunden ist, die eine Verbindung nur zwischen diesen zwei Platten (34) herstellen.

2. Brennstoffzellensystem (10) nach Anspruch 1, eine individuelle Dichtung (62) umfassend, die auf der Anschlussfläche (44) der Platte (34) um die Öffnung (56) herum angeordnet ist, um eine Dichtigkeit mit der Öffnung (56) an der Anschlussfläche (44) der anderen benachbarten Platte (34) herzustellen.

3. Brennstoffzellensystem (10) nach Anspruch 2, bei dem die Anschlussfläche (44) einen ringförmigen Raum (64) zur Aufnahme der Dichtung (62) begrenzt, wobei der ringförmige Aufnahmeraum (64) die Öffnung (56) umgibt.

4. Brennstoffzellensystem (10) nach Anspruch 2 oder 3, bei dem die Dichtung (62) eine torische Dichtung ist.

5. Brennstoffzellensystem (10) nach einem beliebigen der Ansprüche 2 bis 4, eine Mehrzahl von Dichtungen (62) umfassend, wobei die Dichtungen (62) zueinander identisch sind.

6. Brennstoffzellensystem (10) nach einem beliebigen der vorhergehenden Ansprüche, bei dem die spezifischen Verbindungsmittel (70) mindestens ein Befestigungselement (72) umfassen, das sich durch ausgerichtete Befestigungslöcher (74) hindurch erstreckt, die in den Anschlussflächen (44) gegenüberliegend zu den benachbarten Platten (34) gebildet sind.

7. Brennstoffzellensystem (10) nach einem beliebigen der vorhergehenden Ansprüche, bei dem der oder jeder Kollektor (36A, 36B, 36C, 36D, 36E, 36F) über mindestens eine Öffnung (58A, 58B, 58C, 58D, 58E) an der Auflagefläche (40) der Platte (34) für die Fluidverbindung des Kollektors (36A, 36B, 36C, 36D, 36E, 36F) mit anodischen oder kathodischen Kammern des Stapels (14) mündet.

8. Brennstoffzellensystem (10) nach einem beliebigen der vorhergehenden Ansprüche, bei dem der oder jeder Kollektor (36A, 36B, 36C, 36D, 36E, 36F) an zur Platte (34) entgegengesetzten Anschlussflächen (44) mündet.

9. Brennstoffzellensystem (10) nach einem beliebigen der vorhergehenden Ansprüche, bei dem der oder jeder Kollektor (36A, 36B, 36C, 36D, 36E, 36F) im Wesentlichen senkrecht zur Stapelrichtung der Zellen (15) gerichtet ist.

## Claims

1. Fuel cell system (10), comprising a plurality of fuel cell modules (12), each module (12) comprising a stack (14) of cells (15) of fuel cells and a device (17) for clamping the stack, the clamping device (17) comprising at least one clamp (30, 31) comprising a plate (34) and at least one collector (36A, 36B, 36C, 36D, 36E, 36F) for supplying the cells (15) of the stack (14) with oxidising or reducing fluid or for extracting reaction products from the stack (14), the plate (34) comprising a bearing face (40) bearing against one end of the stack (14) and at least one lateral connection face (44) disposed facing a connection face (44) of another adjacent plate (34) belonging to the clamp (30) of another module (12) attached to said module (12), the or each collector (36A, 36B, 36C, 36D, 36E, 36F) being formed inside the plate (34) and opening at a mouth (56) on the connection face (44) and facing a mouth (56) on the connection face (44) of the other adjacent plate (34), so that the collectors (36A, 36B, 36C, 36D, 36E, 36F) of the two plates (34) are in fluid communication, **characterised in that** the plate (34) is formed of a single piece of material and is connected to the other adjacent plate (34) by specific joining means (70) producing a connection only between those two plates (34).

2. Fuel cell system (10) according to claim 1, comprising an individual seal (62) disposed on the connection face (44) of the plate (34), around the mouth (56), for producing tightness with the mouth (56) on the connection face (44) of the other adjacent plate (34).

3. Fuel cell system (10) according to claim 2, wherein the connection face (44) delimits an annular seat (64) for receiving the seal (62), the annular seat (64) surrounding the mouth (56).

4. Fuel cell system (10) according to claim 2 or 3, wherein the seal (62) is an O-ring.

5. Fuel cell system (10) according to any one of claims 2 to 4, comprising a plurality of seals (62), wherein the seals (62) are identical with one another.

6. Fuel cell system (10) according to any one of the preceding claims, wherein the specific joining means (70) comprise at least one fixing member (72) which extends through opposing fixing holes (74) formed in the opposing connection faces (44) of the adjacent plates (34).

7. Fuel cell system (10) according to any one of the preceding claims, wherein the or each collector (36A, 36B, 36C, 36D, 36E, 36F) opens at at least one orifice (58A, 58B, 58C, 58D, 58E) on the bearing face (40) of the plate (34), for the fluidic connection of the collector (36A, 36B, 36C, 36D, 36E, 36F) with anode or cathode compartments of the stack (14).

8. Fuel cell system (10) according to any one of the preceding claims, wherein the or each collector (36A, 36B, 36C, 36D, 36E, 36F) opens in opposite connection faces (44) of the plate (34).

9. Fuel cell system (10) according to any one of the preceding claims, wherein the or each collector (36A, 36B, 36C, 36D, 36E, 36F) is oriented substantially perpendicularly to the direction of stacking of the cells (15).
